# EUROPEAN PATENT APPLICATION

(11) **EP 3 678 313 A1**
(43) Date of publication of application: **08.07.2020**
(21) Application number: 17923492.7
(22) Date of filing: 01.09.2017
(51) Int. Cl.: H04L 1/08, H04L 1/00, H04L 1/16

(54) **COMMUNICATION APPARATUS AND COMMUNICATION METHOD**

(71) Applicant: NTT DOCOMO, INC., Chiyoda-ku Tokyo 100-6150 (JP)
(72) Inventor: IWABUCHI, Masashi, Tokyo 100-6150 (JP); BENJEBBOUR, Anass, Tokyo 100-6150 (JP); KISHIYAMA, Yoshihisa, Tokyo 100-6150 (JP)
(74) Representative: Hoffmann Eitle
(86) International application number: PCT/JP2017/031563
(87) International publication number: WO 2019/043904

(57) **Abstract**

To provide a communication apparatus implementing low latency in retransmission control performed in a radio communication system. Provided is the communication apparatus performing retransmission without using ACK/NACK, the communication apparatus including: a signal generation section that generates a transmission signal and a retransmission signal of the transmission signal; a control section that performs scheduling of the transmission signal and the retransmission signal; and a transmission section that transmits the transmission signal and the retransmission signal. The control section performs scheduling such that the retransmission signal is transmitted with a delay of at least one symbol with respect to the transmission signal.

## Description

### Technical Field

The present invention relates to a communication apparatus and a communication method.

### Background Art

With 5G, new applications of a radio communication system have been studied to be applied to automatic drive, robot control, or the like. For such application, Ultra Reliable and Latency (URLLC) has been discussed in 3GPP.

With 5G, it is required to be able to flexibly deal with applications of required conditions different from conventionally required higher rate and larger capacity. For example, in 3GPP, as an example of a required condition for URLLC, it is required to achieve reliability of 99.999% (packet arrival rate or the like) with user plane latency of 1 ms or less in packet transmission of 32 byte. In order to implement such required condition of URLCC, it has been studied to widen subcarrier interval of signals and shorten symbol length compared to LTE RAT (Radio Access Technology), for example.

When retransmission of packets (or TB: Transport Blocks) occurs, the user plane latency in packet units increases. The user plane latency is time until packet transmission succeeds.

As one packet retransmission control, there is ACK/NACK-based retransmission. Also, as a method for achieving lower latency than ACK/NACK-based retransmission, ACK/NACK-less retransmission has been proposed (for example, see (Non-Patent Literature (hereinafter referred to as "NPL") 1). With ACK/NACK-less retransmission, a transmission apparatus consecutively transmits the same packet, and a reception apparatus, when unable to decode the packet received first, combines and decodes the packets transmitted consecutively. In this manner described, with ACK/NACK-less retransmission, the same packet is transmitted consecutively to suppress latency based on retransmission of the packet.

### Citation List

### Non-Patent Literature

NPL 1
3GPP TSS RAN WG1 Meeting #87, R1-1611220, "Overview of UL URLLC Support in NR"

### Summary of Invention

### Technical Problem

However, when the conventional ACK/NACK-less retransmission is applied to a radio communication system performing radio communication at a wider subcarrier interval compared to LTE RAT, implementation of lower latency may become difficult in some cases.

For example, symbol length is shortened when the subcarrier interval is widened, so that the symbol length becomes shortened for a fading fluctuation period. In addition, a diversity effect (time diversity) based on consecutive transmission of a plurality of packets is decreased, for example. Therefore, there may cause a case where the reception apparatus cannot decode packets properly and retransmission based on ACK/NACK is performed at last, so that lower latency cannot be implemented.

An object of the present invention is to provide a technique capable of implementing lower latency in retransmission control performed in a radio communication system.

### Solution to Problem

A communication apparatus of the present invention is a communication apparatus performing retransmission without using ACK/NACK, the communication apparatus including: a signal generation section that generates a transmission signal and a retransmission signal of the transmission signal; a control section that performs scheduling of the transmission signal and the retransmission signal; and a transmission section that transmits the transmission signal and the retransmission signal, in which the control section performs scheduling such that the retransmission signal is transmitted with a delay of at least one symbol with respect to the transmission signal.

### Advantageous Effects of Invention

With the present invention, it is possible to implement lower latency in retransmission control performed in a radio communication system.

### Brief Description of Drawings

FIG. 1 illustrates an exemplary configuration of a radio communication system according to Embodiment 1 of the present invention;
FIG. 2 illustrates an exemplary chart for describing conventional ACK/NACK-less retransmission;
FIG. 3 illustrates an exemplary chart for describing ACK/NACK-less retransmission according to Embodiment 1 of the present invention;
FIG. 4 illustrates an exemplary block diagram of a radio base station;
FIG. 5 illustrates an exemplary block diagram of a user terminal;
FIG. 6 is a table illustrating an exemplary data configuration of retransmission information stored in a storage section of the radio base station;
FIG. 7 is a table illustrating an exemplary data configuration of retransmission information stored in a storage section of the user terminal;
FIG. 8 is a sequence chart illustrating an exemplary notification operation of retransmission information;
FIG. 9 is a table illustrating an exemplary data configuration of retransmission information stored in a storage section of a radio base station according to Embodiment 2 of the present invention;
FIG. 10 is a table illustrating an exemplary data configuration of retransmission information stored in a storage section of a user terminal;
FIG. 11 is a table illustrating an exemplary data configuration of retransmission information stored in a storage section of a radio base station according to Embodiment 3 of the present invention;
FIG. 12 is a table illustrating an exemplary data configuration of retransmission information stored in a storage section of a user terminal;
FIG. 13 is a table illustrating an exemplary data configuration of retransmission information stored in a storage section of a radio base station according to Embodiment 4 of the present invention;
FIG. 14 is a table illustrating an exemplary data configuration of retransmission information stored in a storage section of a user terminal;
FIG. 15 is a table illustrating an exemplary data configuration of retransmission information stored in a storage section of a radio base station according to Embodiment 5 of the present invention;
FIG. 16 is a table illustrating an exemplary data configuration of retransmission information stored in a storage section of a user terminal; and
FIG. 17 illustrates an exemplary hardware configuration of the radio base station and the user terminal according an embodiment of the present invention.

### Description of Embodiments

Hereinafter, embodiments of the present invention will be described with reference to the accompanying drawings.

### [Embodiment 1]

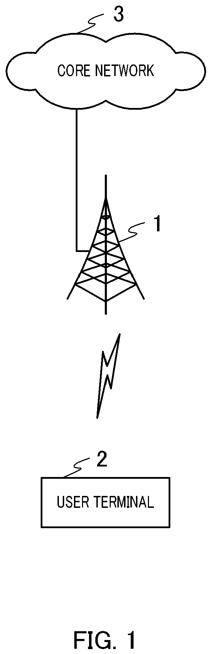

FIG. 1 illustrates an exemplary configuration of a radio communication system according to Embodiment 1 of the present invention. As illustrated in FIG. 1, the radio communication system includes radio base station 1, user terminal 2, and core network 3.

Radio base station 1 is a radio base station to which New RAT is applied. Radio base station 1 includes several tens to several hundreds of antennas, for example, and performs radio communication with user terminal 2 in a high-frequency band (for example, frequency band of 5 GHz or more). Radio base station 1 uses a plurality of antennas, controls amplitude and phase of signals, forms beams with directivity, and transmits and receives signals to/from user terminal 2. User terminal 2 is a radio terminal provided to an automobile, a robot, or the like, for example.

Radio base station 1 is connected to core network 3. Core network 3 includes higher apparatuses such as MME (Mobility Management Entity), S-GW (Serving Gateway), or P-GW (Packet Data network Gateway), for example.

Note that radio base station 1 may be divided into a feeder station performing radio communications with user terminal 2 and a BBU (BaseBand processing Unit) controlling the feeder station, for example, in order to correspond to C-RAN (Centralized Radio Access Network) or sophisticated C-RAN

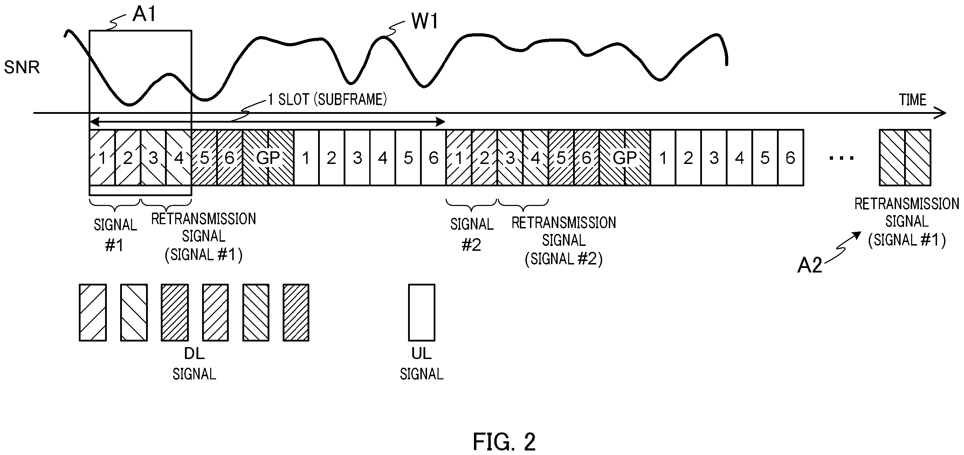

FIG. 2 illustrates an exemplary chart for describing conventional ACK/NACK-less retransmission. Rectangles with hatching illustrated in FIG. 2 indicate symbols. GP illustrated in FIG. 2 indicates a guard period (Guard Period). Waveform W1 illustrated in FIG. 2 indicates SNR (Signal-to-Noise Ratio) of the user terminal.

In FIG. 2, an example of a radio frame in a TDD (Time Division Duplex) system is illustrated. In the example of FIG. 2, one slot (subframe) is configured with fourteen symbols. Note that the definition of one slot is not limited to such configuration, and one slot may be defined to be configured with seven symbols.

Signals #1 and #2 illustrated in FIG. 2 indicate DL (DownLink) signals transmitted to the user terminal from the radio base station.

In the conventional ACK/NACK-less retransmission, as illustrated in FIG. 2, a retransmission signal (signal #1) is transmitted subsequently (consecutively) to signal #1. Signal #1 is transmitted with symbols 1, 2 and the retransmission signal (signal #1) is transmitted with symbols 3, 4. Similarly, in the conventional ACK/NACK-less retransmission, as illustrated in FIG. 2, a retransmission signal (signal #2) is transmitted subsequently (consecutively) to signal #2. Signal #2 is transmitted with symbols 1, 2 of a slot that is next to the slot transmitting signal #1, and the retransmission signal (signal #2) is transmitted with symbols 3, 4.

When unable to decode signal #1 properly, the user terminal combines signal #1 that cannot be decoded with signal #1 of retransmission signal transmitted consecutively to decode signal #1. Also, when unable to decode signal #2 properly, the user terminal combines signal #2 that cannot be decoded with signal #2 of retransmission signal transmitted consecutively to decode signal #2.

When consecutively transmitting the signal and the retransmission signal transmitted from the radio base station to the user terminal, the user terminal may not be able to decode the signals properly.

For example, in domain A1 illustrated in FIG. 2, SNR is decreased in symbols 1 to 4 with which signal #1 and the retransmission signal of signal #1 are transmitted. Therefore, the user terminal cannot decode signal #1 properly even when signal #1 and the retransmission signal thereof are combined.

When unable to decode the signal properly even using the retransmission signal transmitted consecutively, the user terminal transmits a NACK signal to the radio base station. Upon receiving the NACK signal (not illustrated in FIG. 2) from the user terminal, the radio base station transmits the retransmission signal of signal #1 as indicated by arrow A2 illustrated in FIG. 2.

With 5G, it has been studied to use wider subcarrier interval than LTE RAT in order to implement lower latency of the signals (packets or TBs). The use of wider subcarrier interval shortens the symbol length, so that the symbol length for the fading fluctuation period is shortened. Accordingly, when a signal and a retransmission signal thereof are consecutively transmitted to the user terminal, there may cause more cases where the user terminal cannot decode the signal. In addition, the diversity effect (time diversity effect) is decreased, so that there may cause more cases where the user terminal cannot decode the signal. That is, with 5G, it is difficult with the conventional ACK/NACK-less retransmission to implement lower latency of the signals.

Thus, radio base station 1 in FIG. 1 transmits a retransmission signal with a delay of at least one symbol with respect to the signal transmitted to user terminal 2.

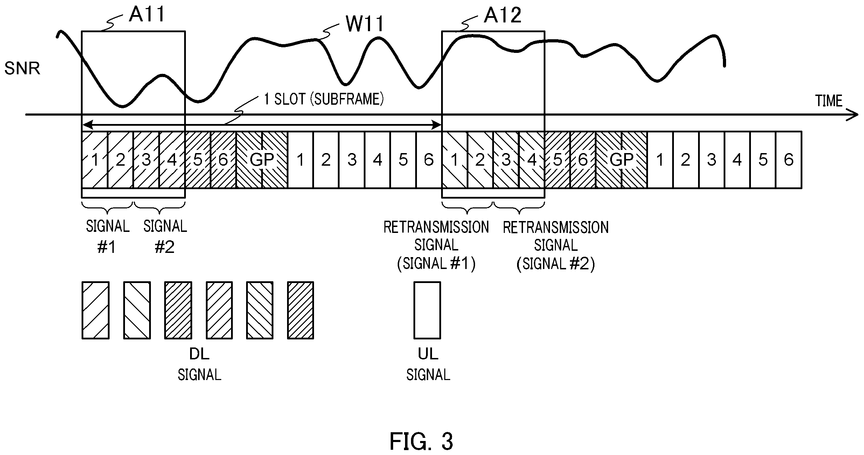

FIG. 3 illustrates an exemplary chart for describing ACK/NACK-less retransmission according to Embodiment 1 of the present invention. As in FIG. 2, waveform W11 indicating SNR is illustrated in FIG. 3.

Radio base station 1 transmits the retransmission signal with a delay of at least one symbol after transmitting the signal to user terminal 2.

For example, as in domain A11 illustrated in FIG. 3, radio base station 1 transmits signal #1 to user terminal 2. After transmitting signal #1, radio base station 1 transmits a retransmission signal (signal #1) to user terminal 2 in a successive slot as illustrated in domain A12. Further, radio base station 1 transmits signal #2 to user terminal 2 as illustrated in domain A11 of FIG. 3. After transmitting signal #2, radio base station 1 transmits a retransmission signal (signal #2) to user terminal 2 in a successive slot as illustrated in domain A12. That is, radio base station 1 transmits the retransmission signals with an interval provided after transmission of signals #1 and #2 to user terminal 2.

In domain A11 illustrated in FIG. 3, SNR is decreased as indicated by waveform W11. That is, at timings (symbols 1 to 4) where signals #1 and #2 are transmitted to user terminal 2, SNR is decreased. In the meantime, in domain A12 illustrated in FIG. 3, SNR is increased. That is, SNR is increased at timings (symbols 1 to 4 of next slot) where the retransmission signals of signals #1 and #2 are transmitted.

As described, radio base station 1 transmits the retransmission signal in the successive slot of the slot where signals #1 and #2 are transmitted. Therefore, even when SNR is decreased at the time of transmitting signals #1 and #2, user terminal 2 can properly decode signals #1 and #2 by using the retransmission signals under a state where SNR is increased.

While the retransmission signal is transmitted in a slot following the slot where the signal is transmitted in the above described case, it is not limited to such case. For example, radio base station 1 may transmit the retransmission signal in a slot several slots later.

Also, while the case of DL signals is described above, the same is applied to UL (UpLink) signals. For example, user terminal 2 may transmit the retransmission signal in a successive slot after transmitting the signal to radio base station 1.

Furthermore, while the case of the TDD system is described above, the FDD (Frequency Division Duplex) system can also be applied in the same way.

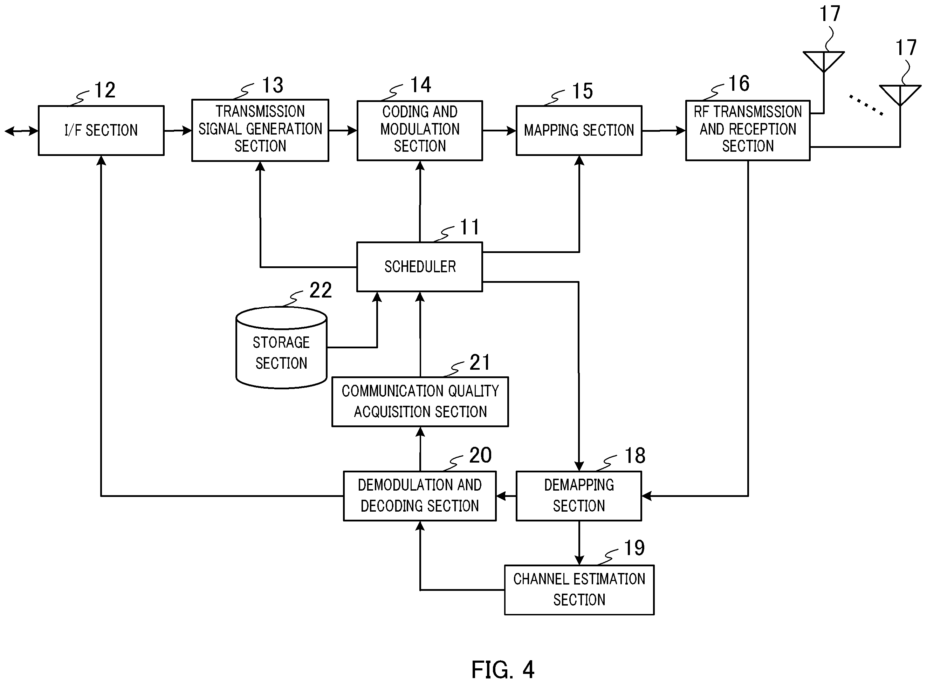

FIG. 4 illustrates an exemplary block diagram of radio base station 1. As illustrated in FIG. 4, radio base station 1 includes scheduler 11, I/F section 12, transmission signal generation section 13, coding and modulation section 14, mapping section 15, RF (Radio Frequency) transmission and reception section 16, antenna 17, demapping section 18, channel estimation section 19, demodulation and decoding section 20, and communication quality acquisition section 21.

Scheduler 11 performs scheduling of the DL signals based on the communication quality between radio base station 1 and user terminal 2 output from communication quality acquisition section 21. The DL signals include DL data signals and DL control signals. The DL data signals are transmitted by using PDSCH (Physical Downlink Shared Channel), for example. The DL control signals are transmitted by using PDCCH (Physical Downlink Control Channel), for example.

Scheduler 11 performs scheduling of the UL signals based on the communication quality between radio base station 1 and user terminal 2 output from communication quality acquisition section 21. The UL signals include UL data signals and UL control signals. The UL data signals are transmitted by using PUSCH (Physical Uplink Shared Channel), for example. The UL control signals are transmitted by using PUCCH (Physical Uplink Control Channel), for example.

Scheduler 11 determines MCS (Modulation and Coding Scheme) and the like of the DL data signals and the UL data signals based on the communication quality between radio base station 1 and user terminal 2 output from communication quality acquisition section 21. Note that MCS is not limited to be configured by radio base station 1 but may also be configured by user terminal 2. When user terminal 2 configures MCS, radio base station 1 may receive MCS information from user terminal 2 (not illustrated).

While details thereof will be described later, scheduler 11 performs scheduling of the signals to be transmitted to user terminal 2 such that the retransmission signal is transmitted with a delay of at least one symbol with respect to the signal transmitted to user terminal 2.

I/F section 12 performs communication with a higher apparatus included in core network 3. The higher apparatus may be MME (Mobility Management Entity) or S-GW (Serving-Gateway), for example. I/F section 12 receives data to be transmitted to user terminal 2 from the higher apparatus, and outputs to transmission signal generation section 13, for example. In addition, I/F section 12 transmits data output from demodulation and decoding section 20 to the higher apparatus. I/F section 12 performs processing and the like regarding higher layers than physical layers or MAC layers, for example.

Transmission signal generation section 13 generates the DL signals including the DL data signals and the DL control signals and the retransmission signals thereof. The DL data signal included in the DL signal includes user data received by I/F section 12, for example. Also, the DL control signal included in the DL signal includes scheduling information including radio resource assigning information of the DL data signal and radio resource assigning information of the UL data signal generated by scheduler 11. In addition, the DL control signal included in the DL signals includes downlink control information (DCI: Downlink Control Information) including the MCS information generated by scheduler 11. Transmission signal generation section 13 outputs generated DL signals to coding and modulation section 14.

The DL signals generated by transmission signal generation section 13 are input to coding and modulation section 14. In addition, the MCS information generated by scheduler 11 is input to coding and modulation section 14. Coding and modulation section 14 performs coding processing and modulation processing on the DL signals output from transmission signal generation section 13 based on the MCS information generated by scheduler 11. Coding and modulation section 14 outputs, to mapping section 15, the DL signals on which the coding processing and the modulation processing are performed.

The DL signals output from coding and modulation section 14 are input to mapping section 15. In addition, the scheduling information generated by scheduler 11 is input to mapping section 15. Mapping section 15 maps the DL signals output from coding and modulation section 14 to a predetermined radio resource (DL resource) based on the DL scheduling information generated by scheduler 11.

RF transmission and reception section 16 performs transmission processing such as up conversion, amplification, and the like on the DL signals output from mapping section 15, and transmits to user terminal 2 from a plurality of antennas 17. In addition, RF transmission and reception section 16 performs reception processing such as amplification, down conversion, and the like on the UL signals transmitted from user terminal 2 and received by the plurality of antennas 17. RF transmission and reception section 16 outputs, to demapping section 18, the UL signals on which the reception processing such as amplification, down conversion, and the like are performed.

The scheduling information of the UL signals generated by scheduler 11 is input to demapping section 18. Demapping section 18 separates (demaps) the UL data signal and the UL control signal of user terminal 2 from the UL signals output from RF transmission and reception section 16 based on the scheduling information (radio resource assigning information of UL) generated by scheduler 11.

The UL control signal demapped by demapping section 18 is input to channel estimation section 19. Channel estimation section 19 estimates the channel state of UL based on a reference signal included in the input UL control signal.

The UL control signal and the UL data signal output from demapping section 18 are input to demodulation and decoding section 20. In addition, the channel state of UL output from channel estimation section 19 is input to demodulation and decoding section 20. Demodulation and decoding section 20 performs demodulation and decoding of the UL control signal and the UL data signal demapped by demapping section 18 based on the channel state estimated by channel estimation section 19. The UL data signal demodulated and decoded by demodulation and decoding section 20 is transmitted to the higher apparatus by I/F section 12, for example.

The UL control signal demodulated and decoded by demodulation and decoding section 20 is input to communication quality acquisition section 21. Communication quality acquisition section 21 acquires the communication quality of DL between radio base station 1 and user terminal 2 based on the input UL control signal.

As will be described later, retransmission information for scheduler 11 to determine retransmission interval of the retransmission signals is stored in storage section 22.

Note that a signal waveform transmitted and received between radio base station 1 and user terminal 2 may be a signal waveform based on OFDM (Orthogonal Frequency Division Multiplexing), SC-FDMA (Single Carrier-Frequency Division Multiple Access), or DFT-S-OFDM (DFT-Spread-OFDM).

In FIG. 4, constituent sections for generating the signal waveform (for example, IFFT processing section, CP adding section, CP removal section, FFT processing section, and the like) are omitted. Furthermore, in FIG. 4, constituent sections for performing MIMO processing (for example, precoding section and the like) are omitted.

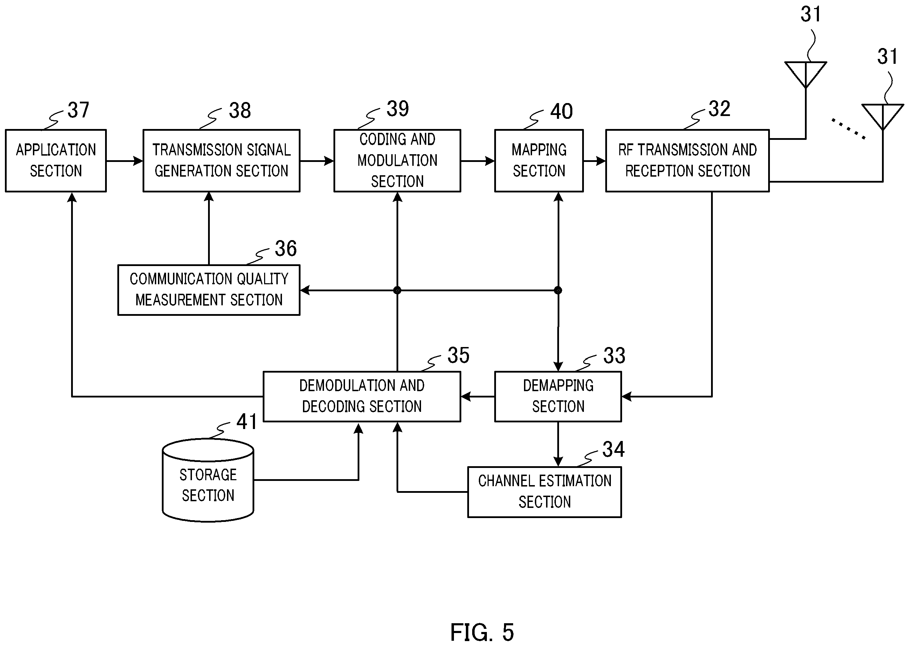

FIG. 5 illustrates an exemplary block diagram of user terminal 2. As illustrated in FIG. 5, user terminal 2 includes antenna 31, RF transmission and reception section 32, demapping section 33, channel estimation section 34, demodulation and decoding section 35, communication quality measurement section 36, application section 37, transmission signal generation section 38, coding and modulation section 39, and mapping section 40.

The DL signals transmitted from radio base station 1 and received by a plurality of antennas 31 are input to RF transmission and reception section 32. RF transmission and reception section 32 performs reception processing such as amplification, down conversion, and the like on the input DL signals. RF transmission and reception section 32 outputs, to demapping section 33, the DL signals on which the reception processing is performed.

Demapping section 33 separates (demaps) the DL control signal from the DL signals output from RF transmission and reception section 32. In addition, demapping section 33 separates (demaps) the DL data signal transmitted to user terminal 2 from the DL signals output from RF transmission and reception section 32 based on the scheduling information (radio resource assigning information of DL) output from demodulation and decoding section 35.

The DL control signal demapped by demapping section 33 is input to channel estimation section 34. Channel estimation section 34 estimates the channel state of DL based on a reference signal included in the input DL control signal. Channel estimation section 34 outputs the estimated channel state of DL to demodulation and decoding section 35.

The channel state of DL estimated by channel estimation section 34 is input to demodulation and decoding section 35. In addition, the DL control signal and the DL data signal demapped by demapping section 33 are input to demodulation and decoding section 35. Demodulation and decoding section 35 performs demodulation and decoding of the DL control signal and the DL data signal demapped by demapping section 33 based on the channel state estimated by channel estimation section 34. In the meantime, when unable to decode the DL control signal and the DL data signal properly, demodulation and decoding section 35 combines the retransmission signal to decode the DL control signal and the DL data signal.

Demodulation and decoding section 35 outputs, to demapping section 33, the schedule information of DL included in the demodulated and decoded DL control signal. In addition, demodulation and decoding section 35 outputs, to coding and modulation section 39 and mapping section 40, the schedule information of UL (radio resource assigning information of UL) and the MCS information included in the demodulated and decoded DL control signal. Further, demodulation and decoding section 35 outputs the reference signal included in the DL control signal to communication quality measurement section 36. Demodulation and decoding section 35 also outputs the demodulated and decoded DL data signal to application section 37.

The reference signal demodulated and decoded by demodulation and decoding section 35 is input to communication quality measurement section 36. Communication quality measurement section 36 measures the communication quality of DL based on input reference signal.

The DL data signal demodulated and decoded by demodulation and decoding section 35 is input to application section 37. Application section 37 performs processing and the like regarding higher layers than physical layers or MAC layers, for example. In addition, application section 37 outputs, to transmission signal generation section 38, the UL data to be transmitted to radio base station 1.

Transmission signal generation section 38 generates the UL signals including the UL data signal and the UL control signal. The UL data signal included in the UL signals includes user data output from application section 37, for example. The UL control signal included in the UL signals includes the communication quality of DL measured by communication quality measurement section 36.

The UL signals output from transmission signal generation section 38 are input to coding and modulation section 39. In addition, the MCS information of UL output from demodulation and decoding section 35 is input to coding and modulation section 39. Coding and modulation section 39 performs coding processing and modulation processing on the UL signals output from transmission signal generation section 38 based on the input MCS information of UL.

The UL signals on which the coding processing and the modulation processing are performed by coding and modulation section 39 are input to mapping section 40. In addition, the scheduling information of UL demodulated and decoded by demodulation and decoding section 35 is input to mapping section 40. Mapping section 40 maps the UL signals input from coding and modulation section 39 on a predetermined radio resource (UL resource) based on the schedule information of UL input from demodulation and decoding section 35.

RF transmission and reception section 32 performs transmission processing such as up conversion, amplification, and the like on the UL signals output from mapping section 40, and transmits to radio base station 1 from a plurality of antennas 31.

As will be described later, retransmission information for demodulation and decoding section 35 to determine the retransmission signals is stored in storage section 41.

In FIG. 5, constituent sections for generating the signal waveform (for example, IFFT processing section, CP adding section, CP removal section, FFT processing section, and the like) are omitted. Furthermore, in FIG. 5, constituent sections for performing MIMO processing (for example, precoding section and the like) are omitted.

Further, down channels and up channels through which radio base station 1 and user terminal 2 perform transmission and reception are not limited to PDCCH, PDSCH, PUCCH, PUSCH, and the like described above. For example, other channels such as PBCH (Physical Broadcast Channel), RACH (Random Access Channel), and the like are included in the down channels and up channels through which radio base station 1 and user terminal 2 perform transmission and reception.

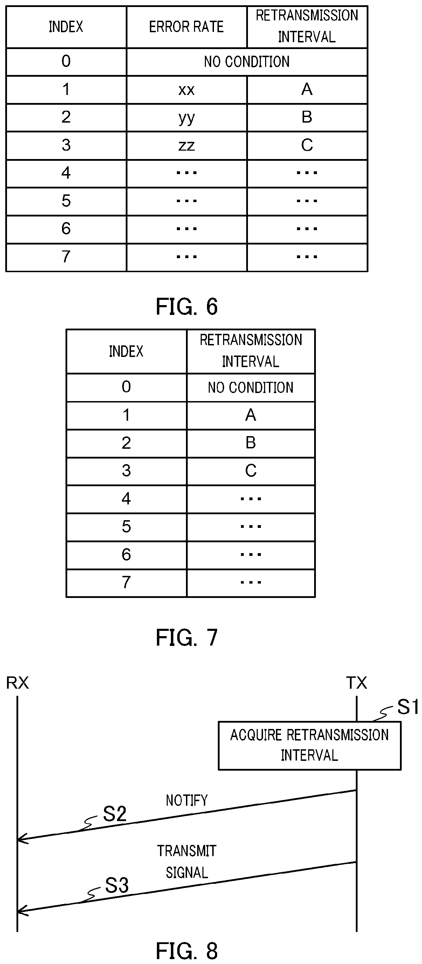

FIG. 6 is a table illustrating an exemplary data configuration of retransmission information stored in storage section 22 of radio base station 1. As illustrated in FIG. 6, the retransmission information includes indices, error rates, and retransmission intervals.

The error rate indicates an error rate required for the signal transmitted to user terminal 2. For example, the error rate is notified from a higher apparatus (for example, MME). In the case of FIG. 6, the larger the index, the smaller (severer) the required error rate.

The retransmission interval is the time from a point where radio base station 1 transmits the signal to user terminal 2 to a point where radio base station 1 transmits the retransmission signal of that signal. In other words, the retransmission interval is the number of symbols taken after transmission of a signal until transmission of a retransmission signal thereof. In the example of FIG. 6, the larger the index, the greater the retransmission interval. That is, the retransmission interval of the retransmission signal becomes longer for the signal with the severer required error rate.

Scheduler 11 refers to the retransmission information of FIG. 6 and determines the retransmission interval of the retransmission signal based on the error rate required for the signal (packet or TB) to be transmitted to user terminal 2. For example, for the signal with the error rate "yy", scheduler 11 determines the retransmission interval of the retransmission signal thereof as "B".

As described above, the retransmission interval of the retransmission signal becomes longer for the signal with the severer required error rate. Accordingly, even when the signal with the severe error rate is transmitted under low SNR, for example, SNR may be improved when the retransmission signal is transmitted. Thereby, radio base station 1 can suppress decrease in the error rate.

In the meantime, the retransmission interval of the retransmission signal becomes short for the signal with non-severe required error rate. Thereby, radio base station 1 can implement low latency of the signals.

Scheduler 11 transmits the retransmission interval determined based on the error rate of the signal to user terminal 2. User terminal 2 can grasp (determine) reception timing of the retransmission signal through notification of the retransmission interval sent from radio base station 1, and can combine the signals.

Scheduler 11 transmits the determined retransmission interval to user terminal 2 by using an index, for example. User terminal 2 acquires the retransmission interval from the received index.

FIG. 7 is a table illustrating an exemplary data configuration of retransmission information stored in storage section 41 of user terminal 2. As illustrated in FIG. 7, the retransmission information includes indices and retransmission intervals. The indices and the retransmission intervals illustrated in FIG. 7 are in the same relation as that of the indices and the retransmission intervals illustrated in FIG. 6.

Demodulation and decoding section 35 refers to storage section 41 and acquires the retransmission interval based on the index transmitted from radio base station 1. For example, when the index "2" is received from radio base station 1, demodulation and decoding section 35 acquires the retransmission interval "B".

With such processing, demodulation and decoding section 35 can identify the retransmission signal of the signal that cannot be decoded, when the signal transmitted from radio base station 1 cannot be decoded properly. Then, demodulation and decoding section 35 combines the signal that cannot be decoded properly with the retransmission signal identified by the retransmission interval acquired from the index, and decodes the signal.

Note that "no condition" in FIG. 6 and FIG. 7 indicates a case where there is no required error rate for the signal to be transmitted to user terminal 2. In such case, radio base station 1 and user terminal 2 perform retransmission control based on ACK/NACK-based retransmission.

FIG. 8 is a sequence chart illustrating an exemplary notification operation of retransmission information. TX illustrated in FIG. 8 indicates radio base station 1. RX indicates user terminal 2.

Scheduler 11 of radio base station 1 acquires the retransmission interval of the retransmission signal from the error rate of the signal to be transmitted to user terminal 2 (step S1). For example, radio base station 1 refers to the retransmission information stored in storage section 22 illustrated in FIG. 6, and acquires the retransmission interval corresponding to the error rate of the signal to be transmitted to user terminal 2.

Next, scheduler 11 notifies (transmits) the index corresponding to the retransmission interval acquired in step S1 to user terminal 2 (step S2). For example, scheduler 11 transmits the index by including it in the DL control signal or the DL data signal.

Then, scheduler 11 performs scheduling of the signals to be transmitted to user terminal 2. In addition, scheduler 11 performs scheduling of the retransmission signals such that the retransmission signals are transmitted to user terminal 2 at the retransmission interval acquired in step S1. With the scheduling above, the signals and the retransmission signals thereof are transmitted to user terminal 2 (step S3).

As described above, scheduler 11 performs scheduling of the signals to be transmitted to user terminal 2 such that the retransmission signal is transmitted with a delay of at least one symbol with respect to the signal transmitted to user terminal 2. Thereby, radio base station 1 can implement low latency in the retransmission control.

In addition, scheduler 11 determines the retransmission interval of the retransmission signal based on the error rate required for the signal. Thereby, radio base station 1 can implement low latency of the signals and deal with the required error rate of the signal.

While radio base station 1 transmits the index to user terminal 2 in the above, there is no intention of setting limit thereon. For example, radio base station 1 may transmit the retransmission interval to user terminal 2.

In addition, while the retransmission control of DL is described above, the same can be applied to the retransmission control of UL as well. For example, scheduler 11 determines the retransmission interval of the retransmission signal of UL in the same way as the case of DL. Then, scheduler 11 notifies the determined retransmission interval to user terminal 2 by the index, for example. User terminal 2 transmits the retransmission signal to radio base station 1 at the retransmission interval corresponding to the notified index.

Meanwhile, when radio base station 1 transmits the retransmission interval of the retransmission signal to user terminal 2 without using the index, storage section 41 of user terminal 2 is unnecessary. This enables reduction in the cost for user terminal 2.

### [Embodiment 2]

In Embodiment 1, the retransmission interval is determined based on the error rate. In Embodiment 2, the number of times of retransmission and the retransmission interval of the retransmission signals are determined based on the error rate. Hereinafter, different points with respect to Embodiment 1 will be described.

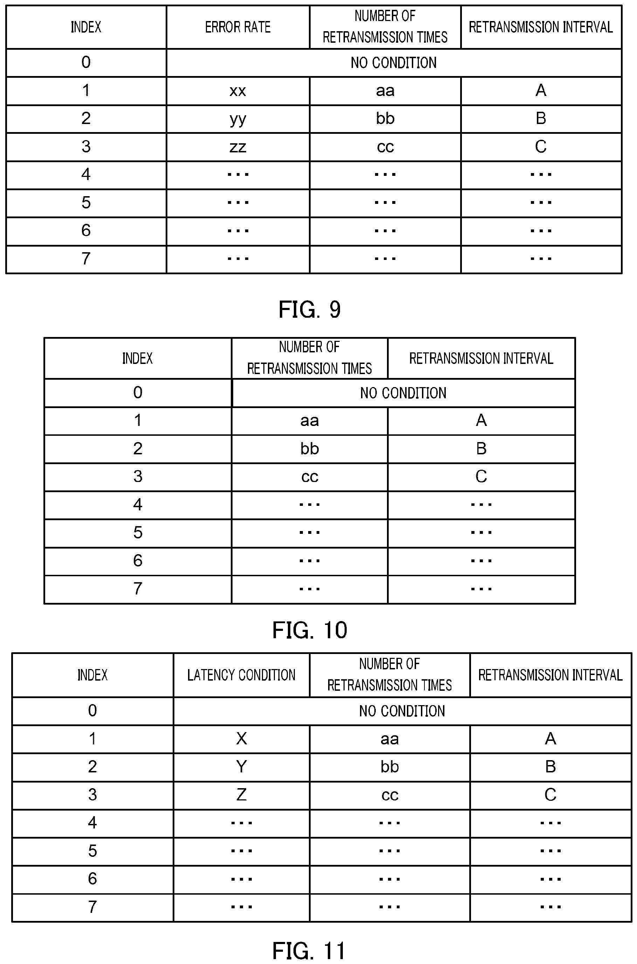

FIG. 9 is a table illustrating an exemplary data configuration of retransmission information stored in storage section 22 of radio base station 1 according to Embodiment 2 of the present invention. As illustrated in FIG. 9, the retransmission information includes indices, error rates, the number of times of retransmission, and retransmission intervals.

The number of times of retransmission indicates the number of times the retransmission signal is transmitted. In the case of FIG. 9, the larger the index, the more the number of times of retransmission. That is, the number of times of retransmission of the retransmission signal becomes greater for the signal with a severer required error rate. The error rates and the retransmission intervals illustrated in FIG. 9 are the same as the error rates and the retransmission intervals described in FIG. 6, so that descriptions thereof are omitted.

Scheduler 11 refers to the retransmission information in FIG. 9 and determines the number of times of retransmission and the retransmission interval of the retransmission signal based on the error rate required for the signal (packet or TB) to be transmitted to user terminal 2. For example, scheduler 11 determines the number of times of retransmission of the retransmission signal as "bb" and the retransmission interval as "B" for the signal with the error rate "yy".

As described above, the number of times of retransmission of the retransmission signal becomes greater and the retransmission interval becomes longer for the signal with the severer required error rate. Accordingly, even when the signal with the severe error rate is transmitted under low SNR, for example, SNR may be improved when the retransmission signal is transmitted. In addition, even when the signal with the severe error rate is transmitted under low SNR, decoding of the signals may be performed properly by combining the retransmission signals because the number of times of retransmission of the retransmission signal becomes greater. Thereby, radio base station 1 can suppress decrease in the error rate.

In the meantime, the number of times of retransmission of the retransmission signal becomes less and the retransmission interval of the retransmission signal becomes shorter for the signal with non-severe required error rate. Thereby, radio base station 1 can implement low latency of the signals.

Scheduler 11 transmits the number of times of retransmission and the retransmission interval determined based on the error rate of the signal to user terminal 2. User terminal 2 can grasp reception timing of the retransmission signal through notification of the number of times of retransmission and the retransmission interval sent from radio base station 1, and can combine the signals.

Scheduler 11 transmits the determined number of times of retransmission and retransmission interval to user terminal 2 by using an index, for example. User terminal 2 acquires the number of times of retransmission and the retransmission interval from the received index.

FIG. 10 is a table illustrating an exemplary data configuration of retransmission information stored in storage section 41 of user terminal 2. As illustrated in FIG. 10, the retransmission information includes indices, the number of times of retransmission, and retransmission intervals. The indices, the number of times of retransmission, and the retransmission intervals illustrated in FIG. 10 are in the same relation as that of the indices, the number of times of retransmission, and the retransmission intervals illustrated in FIG. 9.

Demodulation and decoding section 35 refers to storage section 41 and acquires the number of times of retransmission and the retransmission interval based on the index transmitted from radio base station 1. For example, when the index "2" is received from radio base station 1, demodulation and decoding section 35 acquires the number of times of retransmission "bb" and the retransmission interval "B".

With such processing, demodulation and decoding section 35 can identify the retransmission signal of the signal that cannot be decoded, when the signal transmitted from radio base station 1 cannot be decoded properly. Then, demodulation and decoding section 35 combines the signal that cannot be decoded properly with the retransmission signal identified by the number of times of retransmission and the retransmission interval acquired from the index, and decodes the signal.

The index may be notified before the signal is transmitted from radio base station 1 to user terminal 2, for example. The sequence of the notification operation of the retransmission information is the same as that illustrated in FIG. 8, so that the description thereof is omitted.

As described above, scheduler 11 determines the number of times of retransmission and the retransmission interval of the retransmission signal based on the error rate required for the signal. Thereby, radio base station 1 can implement low latency of the signals and deal with the required error rate of the signal.

While both the number of times of retransmission and the retransmission interval change according to the error rate in the above, it is also possible to fix the retransmission interval and to change the number of times of retransmission according to the error rate. For example, while the number of times of retransmission becomes greater as the index becomes larger in FIG. 9, the retransmission interval may be fixed at a predetermined value.

### [Embodiment 3]

In Embodiment 2, the number of times of retransmission and the retransmission interval of the retransmission signal are determined based on the error rate. In Embodiment 3, the number of times of retransmission and the retransmission interval of the retransmission signal are determined based on a latency condition. Hereinafter, different points with respect to Embodiment 2 will be described.

FIG. 11 is a table illustrating an exemplary data configuration of retransmission information stored in storage section 22 of radio base station 1 according to Embodiment 3 of the present invention. As illustrated in FIG. 11, the retransmission information includes indices, latency conditions, the number of times of retransmission, and retransmission intervals.

The latency condition indicates the maximum value of latency time (maximum value of allowable latency time) required for the signal to be transmitted to user terminal 2. For example, the latency condition is notified from a higher apparatus (for example, MME). The number of times of retransmission illustrated in FIG. 11 is the same as the number of times of retransmission described in FIG. 9, so that the description thereof is omitted. In addition, the retransmission interval illustrated in FIG. 11 is the same as the retransmission interval described in FIG. 6, so that the description thereof is omitted.

In the case of FIG. 11, the required latency condition (maximum value of the latency time) becomes shorter (severer) as the index becomes smaller. As the index becomes larger, the number of times of retransmission becomes greater and the retransmission interval becomes longer. In other words, the number of times of retransmission of the retransmission signal becomes less and the retransmission interval becomes shorter for the signal with the severer latency condition.

Scheduler 11 refers to the retransmission information in FIG. 11 and determines the number of times of retransmission and the retransmission interval of the retransmission signal based on the latency condition required for the signal (packet or TB) to be transmitted to user terminal 2. For example, scheduler 11 determines the number of times of retransmission of the retransmission signal as "bb" and the retransmission interval as "B" for the signal with the latency condition "Y".

As described above, the number of times of retransmission of the retransmission signal becomes less and the retransmission interval becomes shorter for the signal with the severer latency condition. Thereby, radio base station 1 can deal with the required latency of the signals.

In the meantime, the number of times of retransmission of the retransmission signal becomes greater and the retransmission interval becomes longer for the signal with a less severe latency condition. Accordingly, even when the signal with the less severe latency condition is transmitted under low SNR, for example, SNR may be improved when the retransmission signal is transmitted. In addition, even when the signal with the less severe condition is transmitted under low SNR, decoding of the signal may be performed properly by combining the retransmission signal because the number of times of retransmission of the retransmission signal becomes greater. Thereby, radio base station 1 can suppress decrease in the error rate.

Scheduler 11 transmits the number of times of retransmission and the retransmission interval determined based on the latency condition of the signal to user terminal 2. User terminal 2 can grasp reception timing of the retransmission signal through notification of the number of times of retransmission and the retransmission interval sent from radio base station 1, and can combine the signals.

Scheduler 11 transmits the determined number of times of retransmission and retransmission interval to user terminal 2 by using an index, for example. User terminal 2 acquires the number of times of retransmission and the retransmission interval from the received index.

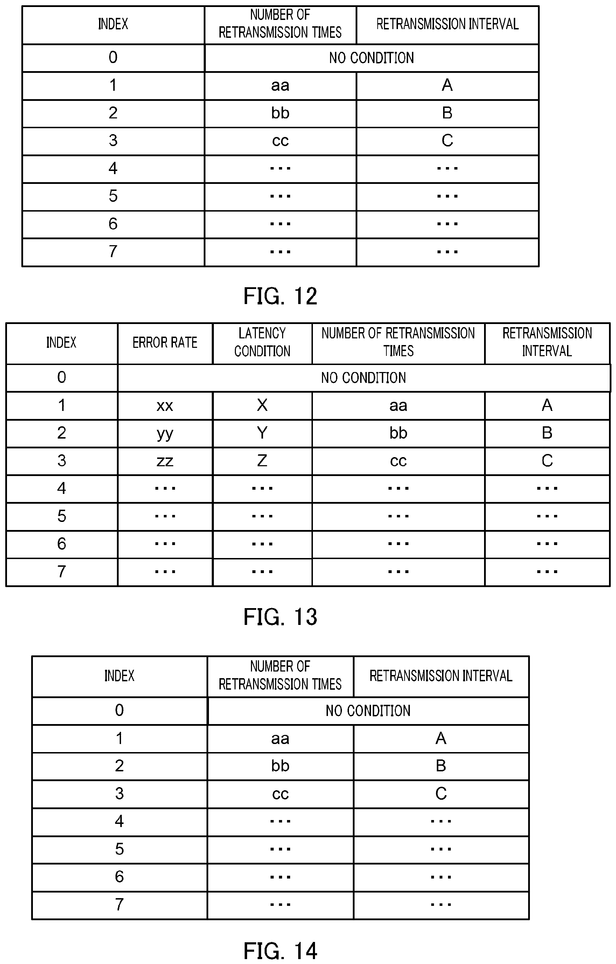

FIG. 12 is a table illustrating an exemplary data configuration of retransmission information stored in storage section 41 of user terminal 2. As illustrated in FIG. 12, the retransmission information includes indices, the number of times of retransmission, and retransmission intervals. The indices, the number of times of retransmission, and the retransmission intervals illustrated in FIG. 12 are in the same relation as that of the indices, the number of times of retransmission, and the retransmission intervals illustrated in FIG. 11.

Demodulation and decoding section 35 refers to storage section 41 and acquires the number of times of retransmission and the retransmission interval based on the index transmitted from radio base station 1. For example, when the index "2" is received from radio base station 1, demodulation and decoding section 35 acquires the number of times of retransmission "bb" and the retransmission interval "B".

With such processing, demodulation and decoding section 35 can identify the retransmission signal of the signal that cannot be decoded, when the signal transmitted from radio base station 1 cannot be decoded properly. Then, demodulation and decoding section 35 combines the signal that cannot be decoded properly with the retransmission signal identified by the number of times of retransmission and the retransmission interval acquired from the index, and decodes the signal.

The index may be notified before the signal is transmitted from radio base station 1 to user terminal 2, for example. The sequence of the notification operation of the retransmission information is the same as that illustrated in FIG. 8, so that the description thereof is omitted.

As described above, scheduler 11 determines the number of times of retransmission and the retransmission interval of the retransmission signal based on the latency condition required for the signal. Thereby, radio base station 1 can deal with the required latency of the signal and improve the error rate.

While both the number of times of retransmission and the retransmission interval change according to the latency condition in the above, it is also possible to fix the retransmission interval and to change the number of times of retransmission according to the latency condition. For example, while the number of times of retransmission becomes greater as the index becomes larger in FIG. 11, the retransmission interval may be fixed at a predetermined value. In the meantime, it is also possible to fix the number of times of retransmission and to change the retransmission interval according to the latency condition. For example, while the retransmission interval becomes longer as the index becomes larger in FIG. 11, the number of times of retransmission may be fixed at a predetermined value.

### [Embodiment 4]

In Embodiment 4, the number of times of retransmission and the retransmission interval of the retransmission signal are determined based on the error rate and the latency condition. Hereinafter, different points with respect to Embodiment 3 will be described.

FIG. 13 is a table illustrating an exemplary data configuration of retransmission information stored in storage section 22 of radio base station 1 according to Embodiment 4 of the present invention. As illustrated in FIG. 13, the retransmission information includes indices, error rates, latency conditions, the number of times of retransmission, and retransmission intervals. The retransmission information illustrated in FIG. 13 includes the error rates added to the retransmission information illustrated in FIG. 11.

In the example of FIG. 13, the error rate becomes smaller (severer) as the index becomes larger. In the meantime, the latency condition (maximum value of the latency time) becomes shorter (severer) as the index becomes smaller. As the index becomes larger, the number of times of retransmission becomes greater and the retransmission interval becomes longer.

Scheduler 11 refers to the retransmission information in FIG. 13 and determines the number of times of retransmission and the retransmission interval of the retransmission signal based on the error rate and the latency condition required for the signal (packet or TB) to be transmitted to user terminal 2. For example, scheduler 11 determines the number of times of retransmission of the retransmission signal as "bb" and the retransmission interval as "B" for the signal with the error rate "yy" and the latency condition "Y".

As described above, the number of times of retransmission of the retransmission signal becomes greater and the retransmission interval becomes longer for the signal with the severer error rate. Further, the number of times of retransmission of the retransmission signal becomes less and the retransmission interval becomes shorter for the signal with the severer latency condition. The number of times of retransmission and the retransmission interval are determined to satisfy the required error rate and the latency condition. Thereby, radio base station 1 can deal with the required error rate and the required latency of the signals.

Scheduler 11 transmits the number of times of retransmission and the retransmission interval determined based on the error rate and the latency condition of the signal to user terminal 2. User terminal 2 can grasp reception timing of the retransmission signal through notification of the number of times of retransmission and the retransmission interval sent from radio base station 1, and can decode the signals.

Scheduler 11 transmits the determined number of times of retransmission and retransmission interval to user terminal 2 by using an index, for example. User terminal 2 acquires the number of times of retransmission and the retransmission interval from the received index.

FIG. 14 is a table illustrating an exemplary data configuration of retransmission information stored in storage section 41 of user terminal 2. As illustrated in FIG. 14, the retransmission information includes indices, the number of times of retransmission, and retransmission intervals. The indices, the number of times of retransmission, and the retransmission intervals illustrated in FIG. 14 are in the same relation as that of the indices, the number of times of retransmission, and the retransmission intervals illustrated in FIG. 13.

Demodulation and decoding section 35 refers to storage section 41 and acquires the number of times of retransmission and the retransmission interval based on the index transmitted from radio base station 1. For example, when the index "2" is received from radio base station 1, demodulation and decoding section 35 acquires the number of times of retransmission "bb" and the retransmission interval "B".

With such processing, demodulation and decoding section 35 can identify the retransmission signal of the signal that cannot be decoded, when the signal transmitted from radio base station 1 cannot be decoded properly. Then, demodulation and decoding section 35 combines the signal that cannot be decoded properly with the retransmission signal identified by the number of times of retransmission and the retransmission interval acquired from the index, and decodes the signal.

The index may be notified before the signal is transmitted from radio base station 1 to user terminal 2, for example. The sequence of the notification operation of the retransmission information is the same as that illustrated in FIG. 8, so that the description thereof is omitted.

As described above, scheduler 11 determines the number of times of retransmission and the retransmission interval of the retransmission signal based on the error rate and the latency condition required for the signal. Thereby, radio base station 1 can deal with the required latency and the required error rate of the signal.

While both the number of times of retransmission and the retransmission interval change according to the error rate and the latency condition in the above, it is also possible to fix the retransmission interval and to change the number of times of retransmission according to the error rate and the latency condition. For example, while the number of times of retransmission becomes greater as the index becomes larger in FIG. 13, the retransmission interval may be fixed at a predetermined value. In the meantime, it is also possible to fix the number of times of retransmission and to change the retransmission interval according to the error rate and the latency condition. For example, while the retransmission interval becomes longer as the index becomes larger in FIG. 13, the number of times of retransmission may be fixed at a predetermined value.

### [Embodiment 5]

In Embodiment 5, when a NACK signal is received for a signal transmitted previously, the scheduler adds an offset to the number of times of retransmission and the retransmission interval and transmits to the user terminal. Hereinafter, different points with respect to Embodiment 4 will be described.

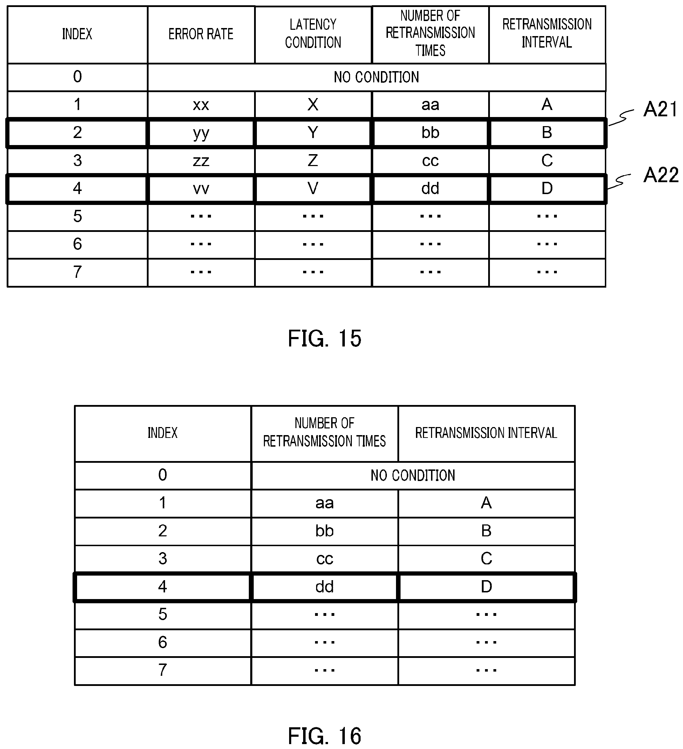

FIG. 15 is a table illustrating an exemplary data configuration of retransmission information stored in storage section 22 of radio base station 1 according to Embodiment 5 of the present invention. The retransmission information illustrated in FIG. 15 is the same as the retransmission information illustrated in FIG. 13, and the description thereof is omitted.

When unable to decode the signal properly even with the use of the retransmission signal, user terminal 2 returns a NACK signal to radio base station 1. When the NACK signal is received from user terminal 2 and retransmission is performed for the signal transmitted previously, scheduler 11 adds an offset to the number of times of retransmission and the retransmission interval determined based on the retransmission information stored in storage section 22 for the retransmission signal of the signal to be transmitted next (a signal different from the signal transmitted previously).

For example, for the signal with the error rate "yy" and the latency condition "Y", scheduler 11 determines the number of times of retransmission of the retransmission signal as "bb" and the retransmission interval as "B" (see bold-line framed area A21 of FIG. 15). However, when the NACK signal is received from user terminal 2 for the signal transmitted previously, scheduler 11 determines the number of times of retransmission of the retransmission signal of the signal to be transmitted next as "dd" and the retransmission interval as "D" (see bold-line framed area A22 of FIG. 15). That is, when the NACK signal is received from user terminal 2 for the previous signal, scheduler 11 increases the number of times of retransmission of the retransmission signal and extends the retransmission interval for the transmission of the next signal in order to improve the error rate.

Scheduler 11 transmits, to user terminal 2, the number of times of retransmission and the retransmission interval with the offset being taken into consideration. User terminal 2 can grasp reception timing of the retransmission signal through notification of the number of times of retransmission and the retransmission interval sent from radio base station 1, and can decode the signals.

Scheduler 11 transmits, to user terminal 2, the determined number of times of retransmission and retransmission interval with the offset being taken into consideration by using an index, for example. User terminal 2 acquires the number of times of retransmission and the retransmission interval from the received index.

FIG. 16 is a table illustrating an exemplary data configuration of retransmission information stored in storage section 41 of user terminal 2. The retransmission information illustrated in FIG. 16 is the same as the retransmission information illustrated in FIG. 14, and the description thereof is omitted.

Demodulation and decoding section 35 refers to storage section 41 and acquires the number of times of retransmission and the retransmission interval based on the index with the offset being taken into consideration. For example, when the index "4" with the offset being taken into consideration is received from radio base station 1, demodulation and decoding section 35 acquires the number of times of retransmission "dd" and the retransmission interval "D".

With such processing, demodulation and decoding section 35 can identify the retransmission signal of the signal that cannot be decoded, when the signal transmitted from radio base station 1 cannot be decoded properly. Then, demodulation and decoding section 35 combines the signal that cannot be decoded properly with the retransmission signal identified by the number of times of retransmission and the retransmission interval acquired from the index, and decodes the signal.

The index may be notified before the signal is transmitted from radio base station 1 to user terminal 2, for example. The sequence of the notification operation of the retransmission information is the same as that illustrated in FIG. 8, so that the description thereof is omitted.

As described above, scheduler 11 determines the number of times of retransmission and the retransmission interval of the retransmission signal with the offset being taken into consideration based on whether or not there is reception of the NACK signal transmitted from user terminal 2. Thereby, radio base station 1 can improve the error rate of the signal for which the NACK signal is returned.

Note that the offset may be taken into consideration for either the number of times of retransmission or the retransmission interval. Further, the offset described above can also be applied to Embodiments 1 to 3.

Furthermore, scheduler 11 may change the offset amount in accordance with the number of times of reception of the NACK signal. For example, scheduler 11 may increase the offset amount in proportion to the number of times of reception of the NACK signal.

Each of Embodiments has been described heretofore.

### (Hardware Configuration)

The block diagrams used to describe the embodiments illustrate blocks on the basis of functions. These functional blocks (constituent sections) are implemented by any combination of hardware and/or software. A means for implementing the functional blocks is not particularly limited. That is, the functional blocks may be implemented by one physically and/or logically coupled apparatus. Two or more physically and/or logically separated apparatuses may be directly and/or indirectly (for example, via wires and/or wirelessly) connected, and the plurality of apparatuses may implement the functional blocks.

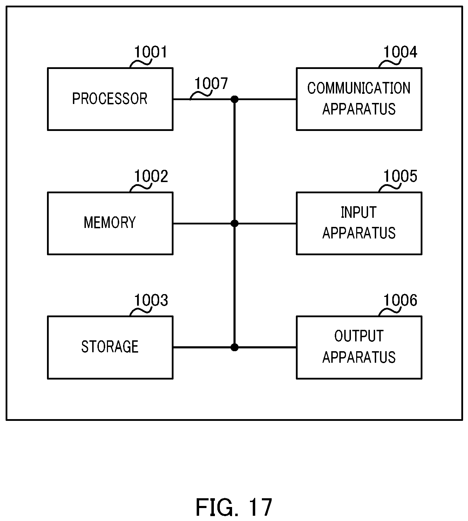

For example, each apparatus of the radio communication system according to an embodiment of the present invention may function as a computer that executes processing of the present invention. FIG. 17 illustrates an example of a hardware configuration of the radio base station and the user terminal according to an embodiment of the present invention. Each apparatus as described above may be physically constituted as a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of radio base station and of user terminal may include one apparatus or a plurality of apparatuses illustrated in the drawings or may not include part of the apparatuses.

For example, although only one processor 1001 is illustrated, there may be a plurality of processors. The processing may be executed by one processor, or the processing may be executed by one or more processors at the same time, in succession, or in another manner. Note that processor 1001 may be implemented by one or more chips.

The functions in each apparatus are implemented by predetermined software (program) loaded into hardware, such as processor 1001, memory 1002, and the like, according to which processor 1001 performs the arithmetic and controls communication performed by communication apparatus 1004 or reading and/or writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, block examples as described above may be implemented by processor 1001.

Processor 1001 reads out a program (program code), a software module, or data from storage 1003 and/or communication apparatus 1004 to memory 1002 and executes various types of processing according to the read-out program or the like. The program used is a program for causing the computer to execute at least part of the operation described in the embodiments. For example, at least a part of functional blocks configuring each apparatus may be stored in memory 1002 and implemented by a control program operated in processor 1001, and other functional blocks may also be implemented in the same way. While it has been described that the various types of processing as described above are executed by one processor 1001, the various types of processing may be executed by two or more processors 1001 at the same time or in succession. Processor 1001 may be implemented by one or more chips. Note that the program may be transmitted from a network through a telecommunication line.

Memory 1002 is a computer-readable recording medium and may be composed of, for example, at least one of a ROM (Read Only Memory), an EPROM (Erasable Programmable ROM), an EEPROM (Electrically Erasable Programmable ROM), and a RAM (Random Access Memory). Memory 1002 may be called a register, a cache, a main memory (main storage apparatus), or the like. Memory 1002 can save a program (program code), a software module, and the like that can be executed to carry out each apparatus according to an embodiment of the present invention.

Storage 1003 is a computer-readable recording medium and may be composed of, for example, at least one of an optical disk such as a CD-ROM (Compact Disc ROM), a hard disk drive, a flexible disk, a magneto-optical disk (for example, a compact disc, a digital versatile disc, or a Blue-ray (registered trademark) disc), a smart card, a flash memory (for example, a card, a stick, or a key drive), a floppy (registered trademark) disk, and a magnetic strip. Storage 1003 may also be called an auxiliary storage apparatus. The storage medium as described above may be a database, server, or other appropriate media including memory 1002 and/or storage 1003.

Communication apparatus 1004 is hardware (transmission and reception device) for communication between computers through a wired and/or wireless network and is also called, for example, a network device, a network controller, a network card, or a communication module.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which outputs to the outside. Note that input apparatus 1005 and output apparatus 1006 may be integrated (for example, a touch panel).

The apparatuses, such as processor 1001 and memory 1002, are connected by bus 1007 for communication of information. Bus 1007 may be composed of a single bus or by buses different among the apparatuses.

Furthermore, each apparatus may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented by at least one of these pieces of hardware.

### (Notification and Signaling of Information)

The notification of information is not limited to the aspects or embodiments described in the present specification, and the information may be notified by another method. For example, the notification of information may be carried out by one or a combination of physical layer signaling (for example, DCI (Downlink Control Information) and UCI (Uplink Control Information)), higher layer signaling (for example, RRC (Radio Resource Control) signaling, MAC (Medium Access Control) signaling, broadcast information (MIB (Master Information Block), and SIB (System Information Block))), and other signals. The RRC signaling may be called an RRC message and may be, for example, an RRC connection setup message, an RRC connection reconfiguration message, or the like.

### (Adaptive System)

The aspects and embodiments described in the present specification may be applied to a system using LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), or other appropriate systems and/or to a next-generation system extended based on the above systems.

### (Processing Procedure and the like)

The orders of the processing procedures, the sequences, the flow charts, and the like of the aspects and embodiments described in the present specification may be changed as long as there is no contradiction. For example, elements of various steps are presented in exemplary orders in the methods described in the present specification, and the methods are not limited to the presented specific orders.

### (Operation of Base Station)

Specific operations which are described in the specification as being performed by the base station (radio base station) may sometimes be performed by an upper node depending on the situation. Various operations performed for communication with a terminal in a network constituted by one network node or a plurality of network nodes including a base station can be obviously performed by the base station and/or a network node other than the base station (examples include, but not limited to, MME (Mobility Management Entity) or S-GW (Serving Gateway)). Although there is one network node in addition to the base station in the case illustrated above, a plurality of other network nodes may be combined (for example, MME and S-GW).

### (Direction of Input and Output)

The information, the signals, and the like can be output from a higher layer (or a lower layer) to a lower layer (or a higher layer). The information, the signals, and the like may be input and output through a plurality of network nodes.

### (Handling of Input and Output Information and the like)

The input and output information and the like may be saved in a specific place (for example, memory) or may be managed by a management table. The input and output information and the like can be overwritten, updated, or additionally written. The output information and the like may be deleted. The input information and the like may be transmitted to another apparatus.

### (Determination Method)

The determination may be made based on a value expressed by one bit (0 or 1), based on a Boolean value (true or false), or based on comparison with a numerical value (for example, comparison with a predetermined value).

### (Software)

Regardless of whether the software is called software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, and the like may be transmitted and received through a transmission medium. For example, when the software is transmitted from a website, a server, or another remote source by using a wired technique, such as a coaxial cable, an optical fiber cable, a twisted pair, and a digital subscriber line (DSL), and/or a wireless technique, such as an infrared ray, a radio wave, and a microwave, the wired technique and/or the wireless technique is included in the definition of the transmission medium.

### (Information and Signals)

The information, the signals, and the like described in the present specification may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

Note that the terms described in the present specification and/or the terms necessary to understand the present specification may be replaced with terms with the same or similar meaning. For example, the channel and/or the symbol may be a signal. The signal may be a message. The component carrier (CC) may be called a carrier frequency, a cell, or the like.

### ("System" and "Network")

The terms "system" and "network" used in the present specification can be interchangeably used.

### (Names of Parameters and Channels)

The information, the parameters, and the like described in the present specification may be expressed by absolute values, by values relative to predetermined values, or by other corresponding information. For example, radio resources may be indicated by indices.

The names used for the parameters are not limited in any respect. Furthermore, the numerical formulas and the like using the parameters may be different from the ones explicitly disclosed in the present specification. Various channels (for example, PUCCH and PDCCH) and information elements (for example, TPC) can be identified by any suitable names, and various names assigned to these various channels and information elements are not limited in any respect.

### (Base Station)

The base station (radio base station) can accommodate one cell or a plurality of (for example, three) cells (also called sector). When the base station accommodates a plurality of cells, the entire coverage area of the base station can be divided into a plurality of smaller areas, and each of the smaller areas can provide a communication service based on a base station subsystem (for example, small base station for indoor, remote radio head (RRH)). The term "cell" or "sector" denotes part or all of the coverage area of the base station and/or of the base station subsystem that perform the communication service in the coverage. Furthermore, the terms "base station," "eNB," "cell," and "sector" can be interchangeably used in the present specification. The base station may be called a fixed station, a NodeB, an eNodeB (eNB), an access point, a femto cell, a small cell, or the like.

### (Terminal)

The user terminal may be called, by those skilled in the art, a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or UE (User Equipment) or by some other appropriate terms.

### (Meaning and Interpretation of Terms)

As used herein, the term "determining" may encompass a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing and the like. That is, "determining" may be regarded as a certain type of action related to determining.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. When the terms are used in the present specification, two elements can be considered to be "connected" or "coupled" to each other by using one or more electrical wires, cables, and/or printed electrical connections or by using electromagnetic energy, such as electromagnetic energy with a wavelength of a radio frequency domain, a microwave domain, or an optical (both visible and invisible) domain that are non-limiting and non-inclusive examples.

The reference signal can also be abbreviated as RS and may also be called a pilot depending on the applied standard. The correction RS may be called a TRS (Tracking RS), a PC-RS (Phase Compensation RS), a PTRS (Phase Tracking RS), or an additional RS. The demodulation RS and the correction RS may be called by other corresponding names, respectively. The demodulation RS and the correction RS may be specified by the same name (for example, demodulation RS).

The description "based on" used in the present specification does not mean "based only on," unless otherwise specifically stated. In other words, the description "based on" means both of "based only on" and "based at least on."

The "section" in the configuration of each apparatus may be replaced with "means," "circuit," "device," or the like.

The terms "including," "comprising," and modifications of these terms are intended to be inclusive just like the term "having," as long as the terms are used in the present specification or the appended claims. Furthermore, the term "or" used in the present specification or the appended claims is not intended to be an exclusive or.

The radio frame may be constituted by one frame or a plurality of frames in the time domain. The one frame or each of the plurality of frames may be called a subframe, a time unit, or the like in the time domain. The subframe may be further constituted by one slot or a plurality of slots in the time domain. The slot may be further constituted by one symbol or a plurality of symbols (OFDM (Orthogonal Frequency Division Multiplexing) symbol, SC-FDMA (Single Carrier-Frequency Division Multiple Access) symbol, or the like) in the time domain.

The radio frame, the subframe, the slot, and the symbol indicate time units in transmitting signals. The radio frame, the subframe, the slot, and the symbol may be called by other corresponding names.

For example, in the LTE system, the base station creates a schedule for assigning radio resources to each mobile station (such as frequency bandwidth that can be used by each mobile station and transmission power). The minimum time unit of scheduling may be called a TTI (Transmission Time Interval).

For example, one subframe, a plurality of continuous subframes, or one slot may be called a TTI.

The resource unit is a resource assignment unit in the time domain and the frequency domain, and the resource unit may include one subcarrier or a plurality of continuous subcarriers in the frequency domain. In addition, the resource unit may include one symbol or a plurality of symbols in the time domain, and may have a length of one slot, one subframe, or one TTI. One TTI and one subframe may be constituted by one resource unit or a plurality of resource units. The resource unit may be called a resource block (RB), a physical resource block (PRB: Physical RB), a PRB pair, an RB pair, a scheduling unit, a frequency unit, or a subband. The resource unit may be constituted by one RE or a plurality of REs. For example, one RE only has to be a resource smaller in unit size than the resource unit serving as a resource assignment unit (for example, one RE only has to be a minimum unit of resource), and the naming is not limited to RE.

The structure of the radio frame is illustrative only, and the number of subframes included in the radio frame, the number of slots included in the subframe, the numbers of symbols and resource blocks included in the slot, and the number of subcarriers included in the resource block can be changed in various ways.

When articles, such as "a," "an," and "the" in English, are added by translation in the entire disclosure, the articles include plural forms unless otherwise clearly indicated by the context.

### (Variations and the like of Aspects)

The aspects and embodiments described in the present specification may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present invention has been described in detail, it is obvious to those skilled in the art that the present invention is not limited to the embodiments described in the present specification. Modifications and variations of the aspects of the present invention can be made without departing from the spirit and the scope of the present invention defined by the description of the appended claims. Therefore, the description of the present specification is intended for exemplary description and does not limit the present invention in any sense.

### Industrial Applicability

An aspect of the present invention is useful for a mobile communication system.

### Reference Signs List

1 Radio Base Station
2 User Terminal
3 Core Network
11 Scheduler
12 I/F Section
13, 38 Transmission Signal Generation Section
14, 39 Coding and Modulation Section
15, 40 Mapping Section
16, 32 RF Transmission and Reception Section
17, 31 Antenna
18, 33 Demapping Section
19, 34 Channel Estimation Section
20, 35 Demodulation and Decoding Section
21 Communication Quality Acquisition Section
36 Communication Quality Measurement Section
37 Application Section
22, 41 Storage Section

## Claims

1. A communication apparatus performing retransmission without using ACK/NACK, the communication apparatus comprising:
a signal generation section that generates a transmission signal and a retransmission signal of the transmission signal;
a control section that performs scheduling of the transmission signal and the retransmission signal; and
a transmission section that transmits the transmission signal and the retransmission signal, wherein
the control section performs scheduling such that the retransmission signal is transmitted with a delay of at least one symbol with respect to the transmission signal.

2. The communication apparatus according to claim 1, wherein
the control section determines the number of symbols taken after transmission of the transmission signal until transmission of the retransmission signal based on an error rate or a latency condition required for the transmission signal.

3. The communication apparatus according to claim 1 or 2, wherein
the control section determines the number of times of transmission of the retransmission signal based on an error rate or a latency condition required for the transmission signal.

4. The communication apparatus according to any one of claims 1 to 3, wherein
the control section determines the number of symbols taken after transmission of the transmission signal until transmission of the retransmission signal based on whether or not there is reception of a NACK signal for the transmission signal transmitted previously or based on the number of times of the reception of the NACK signal.

5. The communication apparatus according to any one of claims 1 to 4, wherein
the control section determines the number of times of transmission of the retransmission signal based on whether or not there is reception of a NACK signal for the transmission signal transmitted previously or based on the number of times of the reception of the NACK signal.

6. A communication method performing retransmission without using ACK/NACK, the communication method comprising:
generating a transmission signal and a retransmission signal for the transmission signal;
performing scheduling such that the retransmission signal is transmitted with a delay of at least one symbol with respect to the transmission signal; and
transmitting the transmission signal and the retransmission signal.
